# EUROPÄISCHE PATENTANMELDUNG

(11) **EP 4 741 095 A2**
(43) Veröffentlichungstag der Anmeldung: **13.05.2026**
(21) Anmeldenummer: 25214146.0
(22) Anmeldetag: 07.11.2025
(51) Int. Cl.: B23K 26/03, B23K 26/38

(54) **LASERBEARBEITUNGSSYSTEM UND VERFAHREN ZUM BEARBEITEN EINES WERKSTÜCKS**

(30) Priorität: 11.11.2024 DE 102024132805
(71) Anmelder: Precitec GmbH & Co. KG, 76571 Gaggenau (DE)
(72) Erfinder: SCHÜRMANN, Bert, 76593 Gernsbach (DE); SPÖRL, Georg, 76287 Rheinstetten (DE)
(74) Vertreter: Ter Meer Steinmeister & Partner

(57) **Zusammenfassung**

Ein Laserbearbeitungssystem zum Bearbeiten eines Werkstücks mittels eines Laserstrahls umfasst einen Laserbearbeitungskopf mit zumindest einer Fokussieroptik zum Fokussieren des Laserstrahls, sodass das Werkstück erwärmt wird und Prozessemission auftritt; zumindest vier optische Sensoren, wobei die optischen Sensoren unempfindlich gegenüber Strahlung mit der Wellenlänge des Laserstrahls sind und wobei die optischen Sensoren jeweils eingerichtet sind, die Prozessemission in zumindest einem Wellenlängenbereich zu erfassen, der die Wellenlänge des Laserstrahls nicht enthält, und darauf basierend ein jeweiliges Sensorsignal zu erzeugen; und eine Steuervorrichtung, wobei die Steuervorrichtung eingerichtet ist, basierend auf dem Mittelwert der Sensorsignale die Bearbeitung des Werkstücks zu überwachen.

## Beschreibung

Die vorliegende Offenbarung betrifft ein Laserbearbeitungssystem und ein Verfahren zum Bearbeiten eines Werkstücks, insbesondere zum Einstechen in ein Werkstück und/oder zum Schneiden eines Werkstücks.

### Hintergrund

Zum Bearbeiten eines Werkstücks, insbesondere zum Schneiden eines Werkstücks, wird ein Laserstrahl auf eine Oberfläche des Werkstücks eingestrahlt. Durch den Laserstrahl wird ein Bereich des Werkstücks so stark erwärmt, dass ein Teil des Werkstücks aufschmilzt und/oder verdampft. Wenn das Werkstück geschnitten werden soll, wird der Laserstrahl so lange auf einen Bereich des Werkstücks eingestrahlt, bis das Werkstück durchstoßen wird, d.h. bis sich ein Loch in dem Werkstück gebildet hat, durch das der Laserstrahl hindurch strahlen kann. Der Laserstrahl wird dann entlang eines Pfades auf dem Werkstück bewegt, sodass ein Schnitt entsteht. Bei der Bearbeitung, insbesondere durch die Erwärmung des Werkstücks, emittiert das Werkstück Prozessemission. Die Prozessemission kann Strahlung im für Menschen sichtbaren Wellenlängenbereich umfassen. Der Laserbearbeitungsprozess kann basierend auf der Prozessemission überwacht werden.

DE 196 44 101 C1 betrifft ein Verfahren zum Erkennen des Strahldurchtritts bei der Bearbeitung eines Werkstücks mittels eines Laserstrahls, bei dem die Intensität einer von der Bearbeitungsstelle kommenden Strahlung durch wenigstens einen Sensor detektiert und bei einer vorbestimmten Intensitätsänderung ein Statussignal erzeugt wird, wobei wenigstens zwei Mittelwerte der Intensität der detektierten Strahlung bei jeweils unterschiedlichen Zeitkonstanten gebildet werden, und das Statussignal erzeugt wird, wenn die Mittelwerte in einem vorbestimmten Verhältnis zueinander stehen.

Der Vergleich von zwei Messwerten zu unterschiedlichen Zeitpunkten bedingt, dass die Prozessüberwachung erst mit einem zeitlichen Versatz erfolgen kann.

### Offenbarung der Erfindung

Es ist eine Aufgabe der vorliegenden Offenbarung, ein Laserbearbeitungssystem und ein Verfahren anzugeben, durch das eine Prozessüberwachung mit einem geringen zeitlichen Versatz, insbesondere in Echtzeit bzw. instantan, erfolgen kann. Es ist eine weitere Aufgabe der vorliegenden Offenbarung, ein Laserbearbeitungssystem und ein Verfahren anzugeben, durch das eine Genauigkeit einer Prozessüberwachung verbessert werden kann. Es ist eine weitere Aufgabe der vorliegenden Offenbarung, ein Laserbearbeitungssystem und ein Verfahren anzugeben, durch das eine konstruktiv einfache und/oder platzsparende Möglichkeit zur Überwachung eines Laserbearbeitungsprozesses mittels eines Laserstrahls mit einer Bearbeitungslaserwellenlänge kleiner als 1200 nm ermöglicht wird.

Gelöst wird zumindest eine der Aufgaben durch die Merkmalskombination der unabhängigen Ansprüche. Bevorzugte Ausführungsformen sind in den abhängigen Ansprüchen und der Beschreibung definiert.

Offenbart ist ein Laserbearbeitungssystem zum Bearbeiten eines Werkstücks mittels eines Laserstrahls (auch als Bearbeitungslaserstrahl bezeichnet). Das Laserbearbeitungssystem umfasst einen Laserbearbeitungskopf mit zumindest einer Fokussieroptik zum Fokussieren des Laserstrahls auf ein Werkstück, sodass das Werkstück erwärmt wird und Prozessemission auftritt. Das Laserbearbeitungssystem umfasst weiterhin zumindest vier optische Sensoren. Die optischen Sensoren sind unempfindlich gegenüber Strahlung mit der Wellenlänge des Laserstrahls. Die optischen Sensoren sind eingerichtet, die Prozessemission in zumindest (oder genau) einem Wellenlängenbereich zu erfassen, der die Wellenlänge des Laserstrahls nicht enthält, und darauf basierend ein jeweiliges Sensorsignal zu erzeugen. Das Laserbearbeitungssystem umfasst weiterhin eine Steuervorrichtung. Die Steuervorrichtung ist eingerichtet, basierend auf einem Mittelwert der Sensorsignale die Bearbeitung des Werkstücks zu überwachen.

Offenbart ist ein Verfahren zum Bearbeiten, insbesondere zum Einstechen und/oder Schneiden, eines Werkstücks mittels eines Laserstrahls. Das Verfahren umfasst die Schritte: Einstrahlen des Laserstrahls auf das Werkstücks, sodass sich das Werkstück erwärmt und Prozessemission auftritt; Erfassen der Prozessemission mittels zumindest vier optischer Sensoren in zumindest (oder genau) einem Wellenlängenbereich, der die Wellenlänge des Laserstrahls nicht enthält, und darauf basierend Erzeugen eines jeweiligen Sensorsignals, wobei die optischen Sensoren unempfindlich gegenüber Strahlung mit der Wellenlänge des Laserstrahls sind; und Überwachen der Bearbeitung des Werkstücks basierend auf einem Mittelwert der Sensorsignale. Das Überwachen kann mittels einer Steuervorrichtung durchgeführt werden. Das Überwachen kann ein Regeln und/oder Steuern des Bearbeitungsprozesses basierend auf dem Mittelwert umfassen.

Jedes hierin offenbarte Verfahren kann durch jedes hierin offenbarte Laserbearbeitungssystem ausgeführt werden. Insbesondere kann die Steuervorrichtung eingerichtet sein, den Mittelwert der Sensorsignale zu bilden und/oder die Bearbeitung des Werkstücks basierend auf dem Mittelwert zu überwachen.

Jedes hierin offenbarte Laserbearbeitungssystem kann in jedem hierin offenbarten Verfahren eingesetzt werden.

Gemäß der vorliegenden Erfindung wird aus den Sensorsignalen der optischen Sensoren ein Mittelwert gebildet. Dieser Mittelwert kann daher auch als gemeinsamer Mittelwert bezeichnet werden. Der Mittelwert kann zu einem bestimmten Zeitpunkt, insbesondere instantan, gebildet werden. Durch die Verwendung von einer Vielzahl von Sensoren, die gegenüber der Laserwellenlänge unempfindlich sind, und der Mittelwertbildung der Sensorsignale, kann der Bearbeitungsprozess quasi ohne Verzögerung überwacht werden. Dies gilt insbesondere, wenn das Signal-Rausch-Verhältnis relativ gering ist. Das Signalrauschen ist oft statistisch, sodass sich bei einer Mittelung eine glattere Basislinie ergibt und das Signal-Rausch-Verhältnis verbessert wird. Dadurch wird die Genauigkeit der Überwachung verbessert.

Auch kann die Überwachung eines Prozesses mit Faserlaser ermöglicht oder verbessert werden. Faserlaser haben typischerweise eine Laserwellenlänge von etwas über 1000 nm, insbesondere zwischen 1070 nm und 1090 nm. Bisher wurden oft Sensoren zur Prozessüberwachung eingesetzt, die Silizium umfassen (z.B. Silizium-Photodioden). Solche Sensoren besitzen einen Wellenlängenempfindlichkeitsbereich von etwa 190 nm bis 1100 nm. Somit sind Silizium-Sensoren empfindlich für die Wellenlänge von Faserlasern und das Messsignal kann einen großen Anteil des Laserlichts enthalten.

Die Bearbeitung des Werkstücks mittels des Laserstrahls kann ein Einstechen, Durchstechen und/oder Schneiden des Werkstücks sein bzw. umfassen. Ebenso kann die Bearbeitung ein Schweißen oder ein Löten sein. Dabei können zumindest zwei Werkstücke verschweißt werden.

Das Werkstück kann ein metallisches Werkstück sein, bzw. aus Metall bestehen oder Metall umfassen.

Durch die Erwärmung des Werkstücks mittels des Laserstrahls tritt Prozessemission auf. Die Prozessemission kann Strahlung im für Menschen sichtbaren Wellenlängenbereich umfassen, also zwischen 350 nm und 850 nm oder zwischen 390 nm und 850 nm oder zwischen 380 nm und 800 nm, z.B. Strahlung eines bei der Bearbeitung entstehenden Plasmas. Die Prozessemission kann Strahlung im infraroten Wellenlängenbereich, insbesondere Temperaturstrahlung, umfassen. Die Prozessemission kann einen Anteil umfassen, der die Wellenlänge der Laserstrahlung aufweist. Dieser Anteil der Prozessemission kann nicht von den optischen Sensoren erfasst werden.

Zusätzlich kann Strahlung des Laserstrahls von dem Werkstück zurückgestreut oder zurückreflektiert werden und in den Laserbearbeitungskopf eintreten. Die zurückgestreute oder zurückreflektierte Strahlung wird nicht von den optischen Sensoren erfasst.

Die Prozessemission kann ausgehend von dem Werkstück in Richtung des Laserbearbeitungskopfes, insbesondere in Richtung der zumindest vier optischen Sensoren, strahlen. Beispielsweise kann die Prozessemission in den Laserbearbeitungskopf, insbesondere durch eine Austritts- bzw. Düsenöffnung für den Laserstrahl in Richtung des Werkstücks, eintreten.

Die optischen Sensoren (auch als Photosensoren oder hierin auch kurz als Sensoren bezeichnet) können gegenüber einem bestimmten Wellenlängenbereich oder bestimmten Wellenlängenbereichen empfindlich sein. Insbesondere können die Sensoren in zumindest einem bestimmten kontinuierlichen bzw. zusammenhängenden Wellenlängenbereich empfindlich sein. Wenn Strahlung in diesem Wellenlängenbereich oder diesen Wellenlängenbereichen auf eine lichtempfindliche Fläche der Sensoren auftrifft, kann ein Messsignal erzeugt werden.

Die optischen Sensoren sind gegenüber der Wellenlänge der Laserstrahlung unempfindlich. "Unempfindlich" kann bedeuten, dass Strahlung mit einer Wellenlänge, für die ein optischer Sensor unempfindlich ist, nicht oder kaum erfasst wird bzw. bei Auftreffen dieser Strahlung auf den optischen Sensor kein oder ein nur geringes Messsignal erzeugt wird. Das geringe Messsignal kann um zumindest eine Größenordnung (Faktor 10), bevorzugt zumindest zwei Größenordnungen (Faktor 100), geringer sein als ein Messsignal für Strahlung mit einer Wellenlänge, für die der Sensor die größte Empfindlichkeit aufweist. Mit anderen Worten kann ein Messsignal eines Sensors für Strahlung mit einer unempfindlichen Wellenlänge höchstens 0,1 oder höchstens 0,01 eines Messsignals des Sensors für Strahlung mit einer Wellenlänge, für die der Sensor die größte Empfindlichkeit aufweist, betragen.

Durch die Unempfindlichkeit der Sensoren für Strahlung mit der Wellenlänge des Laserstrahls wird vom Werkstück zurückgestreute bzw. reflektierte Laserstrahlung und im Schneidkopf diffus gestreute Laserstrahlung von den Sensoren ausgeblendet. Auf diese Weise kann verhindert werden, dass eine hohe Intensität reflektierter bzw. im Schneidkopf diffus gestreuter Laserstrahlung die Prozessemission mit der der Wellenlänge des Laserstrahls und/oder in Wellenlängenbereichen außerhalb der Wellenlänge des Laserstrahls überstrahlt.

Jeder der vier optischen Sensoren kann ein Messsignal (hierin auch Sensorsignal genannt) erzeugen, wenn Prozessemission auf eine jeweilige lichtempfindliche Fläche der Sensoren (auch Sensorfläche genannt) auftrifft. Durch die vier optischen Sensoren können also vier eigenständige Messsignale erzeugt werden. Die optischen Sensoren können eingerichtet sein, die Prozessemission gleichzeitig zu erfassen und/oder gleichzeitig jeweilige Sensorsignale zu erzeugen. Das Messsignal oder Sensorsignal kann einer Intensität der erfassten Prozessemission entsprechen, insbesondere einem zeitlichen Verlauf der Intensität. Beispielsweise kann das Messsignal oder das Sensorsignal eines jeweiligen Sensors der Intensität der Prozessemission in dem gesamten Wellenlängenbereich oder Wellenlängenbereichen, in dem der Sensor empfindlich ist, entsprechen.

Die Sensorsignale der zumindest vier optischen Sensoren werden gemittelt. Insbesondere werden zur Bildung des Mittelwerts der Sensorsignale Signalwerte (auch als Sensorwerte bezeichnet) der Sensorsignale der optischen Sensoren verwendet, die zu demselben Zeitpunkt erfasst wurden.

Zur Bildung des Mittelwerts können die Sensorsignale, bzw. die Signalwerte (auch als Sensorwerte bezeichnet) der Sensorsignale, aufsummiert und durch die Anzahl der aufsummierten Sensorsignale bzw. Signalwerte geteilt werden. Bei vier optischen Sensoren, die jeweils ein Sensorsignal erzeugen, ergeben sich zu einem Zeitpunkt insgesamt vier Sensorwerte. Der Mittelwert kann ein arithmetischer Mittelwert sein.

Die Bildung des Mittelwerts kann durch Parallelschaltung der Sensoren erfolgen. Insbesondere können alle optischen Sensoren parallelgeschaltet sein. Die parallelgeschalteten Sensoren können ein (aufsummiertes) Sensorsignal erzeugen. Das (aufsummierte) Sensorsignal kann als Mittelwert der Sensorsignale verstanden werden. Dadurch kann die Mittelwertbildung ohne nachgelagerte Rechenoperation erfolgen. In dem (aufsummierten) Sensorsignal können sich die einzelnen Rauschanteile weitgehend kompensieren.

Alternativ kann die Steuervorrichtung eingerichtet sein, den Mittelwert aus den Sensorsignalen zu bilden und basierend auf dem Mittelwert der Sensorsignale die Bearbeitung des Werkstücks zu überwachen.

Durch die Bildung eines Mittelwerts der Sensorsignale von zumindest vier optischen Sensoren wird eine Überwachung des Laserbearbeitungsprozesses ermöglicht, auch wenn das Signal-Rausch-Verhältnis der einzelnen Sensorsignale gering ist.

Allgemein kann das Überwachen der Bearbeitung des Werkstücks durch die Steuervorrichtung durchgeführt werden. Dazu kann der Mittelwert der Sensorsignale mit einem Schwellenwert verglichen werden. In Abhängigkeit, ob der Mittelwert der Sensorsignale oberhalb oder unterhalb des Schwellenwerts liegt, kann die Bearbeitung des Werkstücks als "in Ordnung" oder "nicht in Ordnung" bewertet werden. Das Laserbearbeitungssystem kann eingerichtet sein, eine Meldung auszugeben, wenn der Mittelwert der Sensorsignale unterhalb oder oberhalb eines Schwellenwerts liegt.

Ebenso kann das Überwachen der Bearbeitung des Werkstücks umfassen, dass ein Sensorsignalverlauf mit einem vorgegeben Sensorsignalverlauf verglichen wird. Dazu kann der Sensorsignalverlauf über einen definierten Zeitraum erfasst und/oder verwendet werden.

Das Laserbearbeitungssystem kann zumindest sechs optische Sensoren, bevorzugt zumindest acht optische Sensoren, bevorzugt zumindest zehn optische Sensoren, bevorzugt zumindest fünfzehn optische Sensoren, bevorzugt zumindest zwanzig optische Sensoren, bevorzugt zumindest dreißig optische Sensoren, bevorzugt zumindest vierzig optische Sensoren, bevorzugt zumindest fünfzig optische Sensoren, umfassen oder die Sensoren können in einem hierin offenbarten Verfahren eingesetzt werden. Durch eine Vielzahl von Sensoren lässt sich die Aussagekraft des Mittelwerts verbessern und, auch bei geringen Signal-Rausch-Verhältnissen der einzelnen Sensorsignale, ein gut auswertbares Nutzsignal erreichen. Zudem kann mit der Sensoranzahl die zu Verfügung stehende Gesamt-Sensorfläche vergrößert werden.

Die optischen Sensoren können optische Halbleitersensoren umfassen bzw. sein. Zumindest 50 %, zumindest 70 %, zumindest 90 % oder alle der optischen Sensoren können optische Halbleitersensoren sein. Ein optischer Halbleitersensor kann zumindest ein Halbleitermaterial oder -element umfassen, das zur Erfassung der Strahlung eingesetzt wird.

Bevorzugt sind die optischen Halbleitersensoren optische Verbindungshalbleitersensoren. Ein Verbindungshalbleitersensor kann zumindest ein Verbindungshalbleitermaterial umfassen, das zur Erfassung der Strahlung eingesetzt wird. Das Verbindungshalbleitermaterial kann zumindest zwei verschiedene Elemente oder zumindest drei verschiede Elemente umfassen. Das Verbindungshalbleitermaterial kann ein binäres oder ein ternäres Material sein. Die optischen Verbindungshalbleitersensoren können III-V-Verbindungshalbleitersensoren oder II-VI-Verbindungshalbleitersensoren sein.

Das Halbleitermaterial der optischen Sensoren kann Ga (Gallium) umfassen. Das Halbleitermaterial der optischen Sensoren kann As (Arsen) umfassen. Das Halbleitermaterial der optischen Sensoren kann P (Phosphor) umfassen. Bevorzugt umfasst das Halbleitermaterial Ga und As oder Ga und P. Besonders bevorzugt umfasst das Halbleitermaterial Ga, As und P. Die optischen Halbleitersensoren können GaAsP-Sensoren sein.

Keiner der optischen Sensoren kann ein Silizium-Sensor sein. Insbesondere kann keiner der optischen Sensoren ein Elementhalbleitersensor sein. D.h. keiner der Sensoren kann Silizium oder einen Elementhalbleiter zur Erfassung von Strahlung umfassen.

Alle oder mehrere der optischen Sensoren können gleichartig oder identisch sein. Die optischen Sensoren können aber an unterschiedlichen Positionen angeordnet sein. Alle oder mehrere der optischen Sensoren können baugleich bzw. gleich aufgebaut sein, d.h. beispielsweise gleich große Sensorflächen aufweisen. Alle oder mehrere der optischen Sensoren können dieselbe spektrale Empfindlichkeit aufweisen und/oder aus demselben Material bestehen.

Die optischen Sensoren können auch unterschiedliche Arten von Sensoren umfassen, d.h. beispielsweise eine unterschiedliche spektrale Empfindlichkeit aufweisen und/oder aus unterschiedlichem Material bestehen. Unterschiedliche Arten von Sensoren können sich also durch zumindest eine der folgenden Eigenschaften unterscheiden: die spektrale Empfindlichkeit; die Bauweise bzw. die Sensorfläche; und das Material, das zur Erfassung der Strahlung eingesetzt wird.

Zumindest einige der optischen Sensoren können mit einem optischen Filter versehen sein. Durch den optischen Filter kann ein Wellenlängenbereich bzw. Wellenlängenbereiche der Prozessemission durchgelassen und/oder ein (anderer) Wellenlängenbereich bzw. Wellenlängenbereiche der Prozessemission geblockt werden. Auf diese Weise können die optischen Sensoren trotz identischer spektraler Empfindlichkeit eingerichtet sein, Prozessemission (vollständig oder teilweise) in verschiedenen Wellenlängenbereichen zu erfassen.

Zur Bildung des Mittelwerts können (nur) Sensorsignale bzw. Sensorwerte der optischen Sensoren herangezogen werden, die dieselbe spektrale Empfindlichkeit aufweisen und/oder die eingerichtet sind, Prozessemission in demselben Wellenlängenbereich bzw. Wellenlängenbereichen zu erfassen. Die Steuervorrichtung kann eingerichtet sein, für verschiedene Wellenlängenbereiche jeweils einen Mittelwert zu bilden.

Die optischen Sensoren können jeweils eine lichtempfindliche Fläche (auch Sensorfläche genannt) von zumindest 0,01 mm², bevorzugt zumindest 0,02 mm², bevorzugt zumindest 0,03 mm², bevorzugt zumindest 0,04 mm², aufweisen. Die lichtempfindliche Fläche der optischen Sensoren kann jeweils höchstens 0,1 mm², bevorzugt höchstens 0,08 mm², bevorzugt höchstens 0,06 mm², betragen. Besonders bevorzugt beträgt die lichtempfindliche Fläche der optischen Sensoren jeweils zwischen 0,03 mm² und 0,05 mm². Auf diese Weise kann ein Kompromiss zwischen ausreichender Signalstärke (abhängig von der Sensorfläche) und Platzbedarf gefunden werden.

Die optischen Sensoren können zumindest in einem Wellenlängenbereich von mehr als 900 nm, bevorzugt von mehr als 800 nm, unempfindlich sein. D.h. die optischen Sensoren können für Strahlung mit einer Wellenlänge von zumindest mehr als 900 nm oder mehr als 800 nm unempfindlich sein. Die optischen Sensoren können in einem Wellenlängenbereich von zumindest weniger als 550 nm, bevorzugt von weniger als 600 nm, unempfindlich sein.

Die optischen Sensoren können zumindest in einem Wellenlängenbereich zwischen 100 nm und 900 nm, bevorzugt zumindest zwischen 150 nm und 850 nm, bevorzugt zumindest zwischen 200 nm und 800 nm, bevorzugt zumindest zwischen 250 nm und 750 nm, bevorzugt zumindest zwischen 250 nm und 700 nm, bevorzugt zumindest zwischen 300 nm und 680 nm, empfindlich sein.

Die optischen Sensoren können in mehr als einem Wellenlängenbereich empfindlich sein. Beispielsweise können die optischen Sensoren einen optischen Filter umfassen, durch den eine Wellenlänge oder ein Wellenlängenbereich ausgenommen wird, in dem die optischen Sensoren unempfindlich sind.

Der Laserstrahl kann eine Wellenlänge zwischen 950 nm und 1200 nm, bevorzugt zwischen 1000 nm und 1150 nm, bevorzugter zwischen 1000 nm und 1100 nm, bevorzugter zwischen 1025 nm und 1080 nm, aufweisen. Ebenso kann der Laserstrahl eine Wellenlänge zwischen 500 nm und 550 nm, bevorzugt zwischen 510 nm und 530 nm, aufweisen
Das Laserbearbeitungssystem kann einen Faserlaser, einen Hochleistungsdiodenlaser oder einen Scheibenlaser umfassen, um den Laserstrahl bereitzustellen.

Bevorzugt umfasst das Laserbearbeitungssystem keinen CO₂-Laser zur Bereitstellung des Laserstrahls. Der Laserstrahl kann also durch einen anderen Laser als durch einen CO₂-Laser bereitgestellt werden.

Die optischen Sensoren können für Strahlung mit einer Wellenlänge kleiner als die Wellenlänge des Laserstrahls empfindlich sein. Zwischen einer maximalen Wellenlänge, für die die optischen Sensoren empfindlich sind, und der Wellenlänge des Laserstrahls kann ein spektraler Abstand von zumindest 10 nm, bevorzugt zumindest 25 nm, bevorzugt zumindest 50 nm, bevorzugt zumindest 75 nm, bevorzugt zumindest 100 nm, bevorzugt zumindest 150 nm, bevorzugt zumindest 200 nm, bevorzugt zumindest 250 nm, bevorzugt zumindest 300 nm, bestehen.

Die optischen Sensoren können in dem Laserbearbeitungskopf angeordnet sein. Der Laserbearbeitungskopf kann ein Gehäuse umfassen. Die optischen Sensoren können in dem Gehäuse angeordnet sein.

In dem Laserbearbeitungskopf, insbesondere in dem Gehäuse, können mehrere optische Elemente zum Formen und/oder Führen des Laserstrahls angeordnet sein. Beispielsweise kann der Laserbearbeitungskopf, insbesondere das Gehäuse, einen Laserkoppler aufweisen. Der Laserkoppler kann mit einem Laser (d.h. einer Laserquelle) verbunden sein, beispielsweise über eine Lichtleitfaser, und ein Laserstrahl kann ausgehend von der Laserquelle in den Laserbearbeitungskopf bzw. das Gehäuse eingekoppelt werden. In dem Laserbearbeitungskopf, insbesondere in dem Gehäuse, kann eine Kollimationsoptik zum Kollimieren des divergent in den Laserbearbeitungskopf bzw. das Gehäuse eintretenden Laserstrahls angeordnet sein. In dem Laserbearbeitungskopf, insbesondere in dem Gehäuse, kann die Fokussieroptik, beispielsweise eine oder mehrere Fokussierlinsen, zum Fokussieren des Laserstrahls auf das Werkstück angeordnet sein.

Bevorzugt sind alle optischen Sensoren in dem Laserbearbeitungskopf, insbesondere in dem Gehäuse, angeordnet. Alternativ können einige der Sensoren, z.B. höchstens 30 %, höchstens 20 % oder höchstens 10 % der Sensoren, außerhalb des Laserbearbeitungskopfes, insbesondere außerhalb des Gehäuses, angeordnet sein, wobei die übrigen Sensoren innerhalb des Laserbearbeitungskopfes, insbesondere innerhalb des Gehäuses, angeordnet sein können.

Die optischen Sensoren können bezogen auf die Ausbreitungsrichtung des Laserstrahls vor der Fokussieroptik angeordnet sein. Insbesondere sind alle optischen Sensoren bezogen auf die Ausbreitungsrichtung des Laserstrahls vor der Fokussieroptik angeordnet. Die Ausbreitungsrichtung des Laserstrahls kann ausgehend von dessen Eintritt in den Laserbearbeitungskopf oder das Gehäuse bzw. ausgehend von der Laserquelle in Richtung des Werkstücks definiert sein. Die Erfindung ist jedoch nicht auf eine Anordnung vor der Fokussieroptik beschränkt. Die optischen Sensoren können auch nach der Fokussieroptik angeordnet sein.

Die optischen Sensoren können bezogen auf die Ausbreitungsrichtung des Laserstrahls zwischen dem Eintrittsort des Laserstrahls in den Laserbearbeitungskopf und dem Austrittsort des Laserstrahls aus dem Laserbearbeitungskopfangeordnet sein. Insbesondere sind die optischen Sensoren bezogen auf die Ausbreitungsrichtung des Laserstrahls zwischen dem Faserende und dem letzten optischen Element, z.B. einem Schutzglas, des Laserbearbeitungskopfes angeordnet. Die optischen Sensoren können bezogen auf die Ausbreitungsrichtung des Laserstrahls zwischen der Kollimationsoptik und der Fokussieroptik angeordnet sein.

Einige der optischen Sensoren, z.B. höchstens 30 %, höchstens 20 % oder höchstens 10 % der optischen Sensoren, können bezogen auf die Ausbreitungsrichtung des Laserstrahls vor der Kollimationsoptik und/oder nach der Fokussieroptik angeordnet sein.

Die optischen Sensoren können in einer Ebene angeordnet sein, beispielsweise in einer Ebene senkrecht zur optischen Achse der Fokussieroptik. Die optischen Sensoren können in demselben Abstand zur optischen Achse der Fokussieroptik angeordnet sein. Die optischen Sensoren können symmetrisch in dem Laserbearbeitungskopf, insbesondere in dem Gehäuse des Laserbearbeitungskopfes, angeordnet sein. Die Symmetrie kann sich auf den optischen Pfad des Laserstrahls beziehen. Ebenso kann sich die Symmetrie auf die optische Achse der Fokussieroptik beziehen. Insbesondere sind die optischen Sensoren symmetrisch um die optische Achse der Fokussieroptik angeordnet. Auf diese Weise kann eine von einer Bearbeitungsrichtung unabhängige Überwachung bereitgestellt werden.

Eine jeweilige lichtempfindliche Oberfläche der optischen Sensoren kann in Richtung des Werkstücks bzw. in Richtung einer Austrittsöffnung des Laserbearbeitungskopfes orientiert sein bzw. dieser zugewandt sein. Ebenso können jeweilige lichtempfindliche Oberflächen der optischen Sensoren entgegen der Richtung des Werkstücks bzw. entgegen der Richtung einer Austrittsöffnung des Laserbearbeitungskopfes orientiert sein. Die jeweiligen lichtempfindlichen Oberflächen der optischen Sensoren können dem Werkstücks bzw. einer Austrittsöffnung des Laserbearbeitungskopfes abgewandt sein. Dabei kann die Prozessemission in den Laserbearbeitungskopf eintreten und in dem Laserbearbeitungskopf, z.B. von einer optischen Grenzfläche, auf die Sensoren reflektiert werden.

Bevorzugt sind alle der optischen Sensoren außerhalb des optischen Pfads des Laserstrahls angeordnet. Der optische Pfad des Laserstrahls kann durch optische Elemente in dem Laserbearbeitungskopf definiert sein.

Das Laserbearbeitungssystem kann eine Sensoranordnung umfassen. Die optischen Sensoren, insbesondere alle der optischen Sensoren, können auf oder in der Sensoranordnung angeordnet sein. Die Sensoranordnung kann in dem Laserbearbeitungskopf, insbesondere in dem Gehäuse des Laserbearbeitungskopfes, angeordnet sein. Die Sensoranordnung kann eine Platine oder Platte umfassen, auf der die optischen Sensoren angeordnet sind.

Die Sensoranordnung, insbesondere die Platine oder Platte, kann ringförmig ausgebildet sein. Die optischen Sensoren können auf der Ringfläche der Sensoranordnung angeordnet sein. Die Ringfläche kann eben sein. Die optischen Sensoren können entlang der Ringfläche gleichmäßig bzw. regelmäßig verteilt oder unregelmäßig verteilt sein. Die Sensoranordnung kann rotationssymmetrisch ausgebildet sein. Die Sensoranordnung kann koaxial zur optischen Achse der Fokussieroptik angeordnet sein.

Die Sensoranordnung kann eine Ausnehmung aufweisen. Die Ausnehmung kann im Wesentlichen in der Mitte der Sensoranordnung ausgebildet sein. Die Ausnehmung kann (vollständig) von der Ringfläche der Sensoranordnung umgeben sein. Die Sensoranordnung kann so in dem Laserbearbeitungskopf oder in dem Gehäuse des Laserbearbeitungskopfes angeordnet sein, dass der Laserstrahl während der Bearbeitung des Werkstücks durch die Ausnehmung tritt. Die Sensoranordnung kann den optischen Pfad des Laserstrahls zumindest teilweise, insbesondere vollständig, umgeben.

Die Sensoranordnung kann einen Innendurchmesser von zumindest 5 mm, bevorzugt zumindest 10 mm, bevorzugt zumindest 20 mm, bevorzugt zumindest 25 mm, aufweisen. Der Innendurchmesser der Sensoranordnung kann höchstens 150 mm, bevorzugt höchstens 100 mm, bevorzugt höchstens 50 mm, bevorzugt höchstens 40 mm, bevorzugt höchstens 35 mm, betragen. Der Innendurchmesser der Sensoranordnung kann einem Durchmesser der Ausnehmung entsprechen.

Die optischen Sensoren können in einer Ebene angeordnet sein. Die Ebene kann im Wesentlichen (± 10° oder ± 5°) senkrecht zur optischen Achse der Fokussieroptik oder zum optischen Pfad des Laserstrahls oder zur Ausbreitungsrichtung des Laserstrahls orientiert sein.

Alle der optischen Sensoren können in der Ebene angeordnet sein. Ebenso können nur einige der optischen Sensoren, z.B. zumindest 50 %, zumindest 60 %, zumindest 70 %, zumindest 80 % oder zumindest 90 % der optischen Sensoren, in der Ebene angeordnet sein. Die übrigen optischen Sensoren können außerhalb der Ebene angeordnet sein.

Zumindest zwei der optischen Sensoren können in einem Stapel angeordnet sein. Bevorzugt sind zumindest vier, bevorzugt zumindest zehn, bevorzugt zumindest fünfzehn, optische Sensoren in dem Stapel angeordnet.

Die optischen Sensoren können in dem Stapel entlang einer (gedachten) Linie angeordnet sein. Die Linie kann sich im Wesentlichen (±10° oder ±5° oder ±2°) parallel zur optischen Achse des Laserstrahls erstrecken. Die optische Achse kann durch die Kollimationsoptik und/oder die Fokussieroptik festgelegt sein.

Das Laserbearbeitungssystem kann mehrere Stapel mit optischen Sensoren umfassen. Bevorzugt umfasst das Laserbearbeitungssystem zumindest zwei, bevorzugt zumindest drei, bevorzugt zumindest vier, bevorzugt zumindest fünf, Stapel. Jeder der Stapel kann jeder hierin offenbarter Stapel sein.

Die Stapel können um die optische Achse herum angeordnet sein. In umfänglicher Richtung um die optische Achse herum können die Stapel gleichmäßig verteilt angeordnet sein. Ebenso können die Stapel um die optische Achse herum ungleichmäßig verteilt angeordnet sein.

Allgemein kann das Laserbearbeitungssystem eingerichtet sein, ein Werkstück mittels des Laserstrahls zu schneiden. Der Laserbearbeitungsprozess kann ein Laserschneidprozess sein.

Die Steuervorrichtung kann eingerichtet sein, basierend auf den Signalen der optischen Sensoren, insbesondere basierend auf dem Mittelwert, einen Einstechzeitpunkt des Laserstrahls in das Werkstück zu bestimmen, einen Einstechvorgang des Laserstrahls in das Werkstück zu überwachen, eine Qualität der Bearbeitung des Werkstücks zu bestimmen, einen Schneidfehler zu erkennen, eine Qualität einer Schnittkante des Werkstücks zu bestimmen, einen Schnittabriss zu erkennen und/oder eine Schnittunterbrechung zu erkennen. Zur Durchführung der genannten Operationen können Sensorsignale von allen optischen Sensoren verwendet werden. Insbesondere kann der Mittelwert unter Verwendung aller Sensorsignale gebildet werden und die genannten Operationen können basierend auf dem Mittelwert durchgeführt werden.

Allgemein kann der Laserbearbeitungsprozess, der in dem Laserbearbeitungssystem durchgeführt werden kann, basierend auf der Bestimmung des Einstechzeitpunkt des Laserstrahls in das Werkstück, auf der Überwachung des Einstechvorgang des Laserstrahls in das Werkstück, auf der Bestimmung der Qualität der Bearbeitung des Werkstücks und/oder der Bestimmung der Qualität einer Schnittkante des Werkstücks verändert werden. Die Veränderung des Laserbearbeitungsprozesses kann ein Steuern oder Regeln des Prozesses sein.

Durch die Erfassung der Prozessemission mittels der optischen Sensoren, kann der Laserbearbeitungsprozess überwacht werden. Insbesondere ermöglichen die mehreren optischen Sensoren, die die im Schneidkopf diffus gestreute Laserstrahlung bzw. rückgestreute Strahlung des Bearbeitungslasers ausblenden, eine schnelle und genaue Überwachung des Laserbearbeitungsprozesses. Die konstruktive Umsetzung ist dabei relativ einfach und kompakt.

### Kurzbeschreibung der Zeichnungen

Die Erfindung wird im Folgenden anhand von Figuren im Detail beschrieben.
- Fig. 1: zeigt ein Laserbearbeitungssystem 100;
- Fig. 2: zeigt schematisch einige Komponenten des Laserbearbeitungssystems 100;
- Fig. 3: zeigt eine Sensoranordnung 16;
- Fig. 4a: zeigt schematisch einige Komponenten eines Laserbearbeitungssystems 100 in einer Seitenansicht; und
- Fig. 4b: zeigt schematisch einige Komponenten des Laserbearbeitungssystems 100 in einer Draufsicht.

### Detaillierte Beschreibung der Zeichnungen

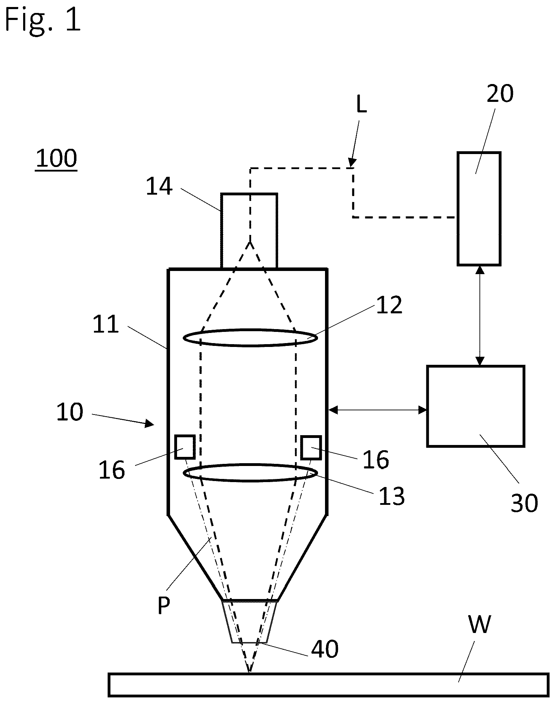

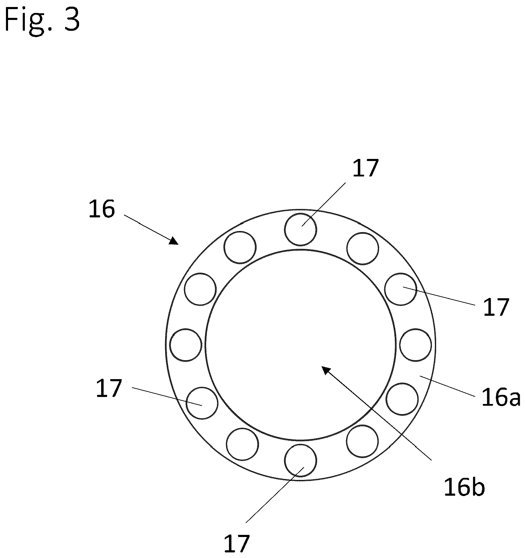

Fig. 1 zeigt ein Laserbearbeitungssystem 100. Das Laserbearbeitungssystem 100 kann einen Laserbearbeitungskopf 10, zumindest vier optische Sensoren 17 (näher in Fig. 3 gezeigt) und eine Steuervorrichtung 30 umfassen. Das Laserbearbeitungssystem 100 kann weiterhin eine Laserquelle 20 umfassen.

Die Laserquelle 20 kann einen Bearbeitungslaserstrahl L (Laserstrahl) erzeugen. Die Laserquelle 20 kann als Single-Mode-Laser, als Festkörperlaser, als Faserlaser, als Hochleistungsdiodenlaser oder als Scheibenlaser ausgebildet sein. Bevorzugt ist die Laserquelle nicht als CO₂-Laser ausgebildet.

Der von der Laserquelle 20 erzeugte Bearbeitungslaserstrahl L kann über eine Lichtleitfaser von der Laserquelle 20 zu dem Laserbearbeitungskopf 10 übertragen werden. Über einen Faserkoppler 14 kann der Bearbeitungslaserstrahl L in den Laserbearbeitungskopf 10 eingekoppelt werden. Der Faserkoppler 14 kann an einem Gehäuse 11 des Laserbearbeitungskopfes 10 angeordnet sein.

Der Laserbearbeitungskopf 10 kann eine Kollimationsoptik 12 (Kollimieroptik) umfassen. Die Kollimationsoptik 12 kann in dem Laserbearbeitungskopf 10 so angeordnet und ausgebildet sein, dass der divergent in den Laserbearbeitungskopf 10 eintretende Bearbeitungslaserstrahl L kollimiert wird. Die Kollimationsoptik 12 kann in dem Gehäuse 11 des Laserbearbeitungskopfes 10 angeordnet sein.

Die Kollimationsoptik 12 kann zumindest eine Linse oder zwei oder mehr Linsen umfassen. Ein Abstand zwischen den zwei oder mehr Linsen kann einstellbar sein, insbesondere durch einen Elektromotor. Die Kollimationsoptik 12 kann eine optische Achse definieren.

Ferner kann das Laserbearbeitungssystem 100 eine Fokussieroptik 13 umfassen. Die Fokussieroptik 13 kann in dem Laserbearbeitungskopf 10 so angeordnet und ausgebildet sein, dass der kollimierte Bearbeitungslaserstrahl L fokussiert wird. Die Fokussieroptik 13 kann in dem Gehäuse 11 des Laserbearbeitungskopfes 10 angeordnet sein.

Die Fokussieroptik 13 kann zumindest eine Linse oder zwei oder mehr Linsen umfassen. Ein Abstand zwischen den zwei oder mehr Linsen kann einstellbar sein, insbesondere durch einen Elektromotor. Durch die Fokussieroptik 13 kann eine optische Achse definiert sein. Die Fokussieroptik 13 kann ein F-Theta Objektiv sein.

Der fokussierte Bearbeitungslaserstrahl L kann aus dem Laserbearbeitungskopf 10 ausgestrahlt werden und auf ein Werkstück W eingestrahlt werden, um das Werkstück W zu bearbeiten.

Der Laserbearbeitungskopf 10 kann eine Austrittsöffnung 40 umfassen. Aus der Austrittsöffnung 40 kann der Laserstrahl aus dem Laserbearbeitungskopf 10 austreten und in Richtung des Werkstücks W strahlen. Die Austrittsöffnung 40 kann in einer Düse ausgebildet sein, die an einem Ende des Laserbearbeitungskopfes 10, insbesondere an einem Ende des Gehäuses 11 des Laserbearbeitungskopfes 10, angeordnet ist.

Beispielsweise kann das Werkstück W geschnitten werden. Dabei kann der Laserstrahl L auf eine Oberfläche des Werkstücks W eingestrahlt werden, bis ein Bereich des Werkstücks W aufschmilzt und/oder verdampft. Der Laserstrahl L kann so lange auf den Bereich der Werkstücks W eingestrahlt werden, bis das Werkstück W durchstoßen wird (sogenanntes Einstechen in das Werkstück). Dabei kann ein Loch in dem Werkstück W gebildet werden, durch das der Laserstrahl L hindurchstrahlen kann. Der Laserstrahl L kann nachfolgend entlang eines Bearbeitungspfades bewegt werden, um einen Schnitt in dem Werkstück W auszubilden. Ebenso kann das Werkstück W geschweißt oder gelötet werden. Insbesondere können zwei Werkstücke W miteinander verschweißt oder verlötet werden.

Der Laserbearbeitungskopf 10 kann ein Laserstrahlschneidkopf, ein Laserstrahlschweißkopf oder ein Laserstrahllötkopf sein.

Das Werkstück W kann Prozessemission P emittieren. Die Prozessemission P kann Strahlung in verschiedenen Wellenlängenbereichen umfassen, z.B. im für Menschen sichtbaren Wellenlängenbereich, im infraroten Wellenlängenbereich, im ultravioletten Wellenlängenbereich und im Wellenlängenbereich der Laserstrahlung L. Die Prozessemission P kann ausgehend von dem Werkstück W in den Laserbearbeitungskopf 10, insbesondere über die Austrittsöffnung 40, einstrahlen.

Die zumindest vier optischen Sensoren 17 können in dem Laserbearbeitungskopf 10 angeordnet sein. Die optischen Sensoren 17 sind gegenüber Strahlung mit der Wellenlänge des Laserstrahls L unempfindlich, sodass rückreflektierte Laserstrahlung L nicht von den optischen Sensoren 17 detektiert wird. Gleichwohl sind die optischen Sensoren 17 eingerichtet, Prozessemission P zu erfassen. Hierfür weisen die optischen Sensoren 17 vorzugsweise eine spektrale Empfindlichkeit zumindest im sichtbaren Wellenlängenbereich, d.h. zwischen 350 nm und 780 nm, auf. Bevorzugt sind die optischen Sensoren 17 in einem Wellenlängenbereich von mehr als 900 nm unempfindlich. Unterhalb einer Wellenlänge von 900 nm können die optischen Sensoren 17 zumindest teilweise oder bereichsweise empfindlich gegenüber Strahlung, insbesondere der Prozessemission P, sein.

Die optischen Sensoren 17 erfassen die Prozessemission P in einem Wellenlängenbereich oder in Wellenlängenbereichen, der die Wellenlänge des Laserstrahls L nicht enthält, und erzeugen ein Sensorsignal (Messsignal). Jeder der optischen Sensoren 17 kann ein Sensorsignal erzeugen.

Die Sensorsignale der optischen Sensoren 17 zu einem bestimmten Zeitpunkt können durch die Steuervorrichtung 30 gemittelt werden, um einen Mittelwert der Sensorsignale zu bilden.

Ebenso können die Sensoren 17 parallelgeschaltet sein. Durch die Parallelschaltung kann ein (aufsummiertes) Sensorsignal mittels der Sensoren 17 erzeugt werden. Das (aufsummierte) Sensorsignal kann dem Mittelwert der Sensorsignale entsprechen.

Basierend auf dem Mittelwert kann der Laserbearbeitungsprozess überwacht werden. Insbesondere kann ein Einstechzeitpunkt des Laserstrahls in das Werkstück W bestimmt werden, der Einstechvorgang des Laserstrahls L in das Werkstück W überwacht werden, eine Qualität der Bearbeitung des Werkstücks W bestimmt werden und/oder eine Qualität einer Schnittkante bzw. der Schnittkanten des Werkstücks W bestimmt werden. Der Einstechvorgang und der Schneidvorgang können für unterschiedliche Werkstücke W oder unterschiedliche Bereiche auf einem Werkstück W verschieden verlaufen. Beispielsweise kann der Einstechvorgang schneller beendet sein, wenn der Bereich des Werkstücks W "warm" ist, verglichen mit einem "kalten" Bereich des Werkstücks W. Wenn nahe an dem Bereich des Werkstücks W, in dem ein Einstechvorgang ausgeführt werden soll, bereits ein anderer Einstechvorgang bzw. Schneidvorgang durchgeführt wurde, kann der Bereich des Werkstücks W bereits eine erhöhte Temperatur aufweisen und der Einstechvorgang verkürzt sein.

Der Laserbearbeitungsprozess kann basierend auf der Überwachung gesteuert oder geregelt werden. Beispielsweise kann der Laserstrahl L entlang des Bearbeitungspfads zur Bildung des Schnitts bewegt werden, sobald der Einstechvorgang abgeschlossen ist. Dafür ist eine Kenntnis über den Abschluss des Einstechvorgangs ohne großen zeitlichen Versatz hilfreich. Durch die Mittelwertbildung wird eine schnelle Überwachung des Laserbearbeitungsprozesses ermöglicht, sodass der Laserbearbeitungsprozess verbessert durchgeführt werden kann.

Die optischen Sensoren 17 können in dem Laserbearbeitungskopf 10 bezogen auf die Ausbreitungsrichtung des Laserstrahls L vor der Fokussieroptik 13 angeordnet sein. Bevorzugt sind die optischen Sensoren 17 bezogen auf die Ausbreitungsrichtung des Laserstrahls L in dem Laserbearbeitungskopf 10 vor der Fokussieroptik 13 und nach der Kollimationsoptik 12 angeordnet. Es ist ebenso möglich, dass die optischen Sensoren 17 bezogen auf die Ausbreitungsrichtung des Laserstrahls L in dem Laserbearbeitungskopf 10 nach der Fokussieroptik 13 oder vor der Kollimationsoptik 12 angeordnet sind. Es ist jedoch bevorzugt, dass alle optischen Sensoren 17 in dem Laserbearbeitungskopf 10 angeordnet sind.

Die optischen Sensoren 17 können in einer Ebene angeordnet sein. Die Ebene kann im Wesentlichen senkrecht zur optischen Achse der Fokussieroptik 13 und/oder zur optischen Achse der Kollimationsoptik 12 orientiert sein.

Eine jeweilige lichtempfindliche Fläche der optischen Sensoren 17 kann in Richtung des Werkstücks W und/oder in Richtung der Austrittsöffnung 40 orientiert sein oder dieser zugewandt sein. D.h. die lichtempfindlichen Flächen der optischen Sensoren 17 können dem Werkstück W und/oder der Austrittsöffnung 40 gegenüberliegen oder diesen zugewandt sein. Ebenso können die lichtempfindlichen Flächen der optischen Sensoren 17 dem Eintrittsort, beispielsweise dem Faserkoppler 14, zugewandt sein. Die jeweiligen lichtempfindlichen Flächen der optischen Sensoren 17 können im Wesentlichen (± 10° oder ± 5°) senkrecht zur optischen Achse der Fokussieroptik 13 angeordnet sein.

Das Laserbearbeitungssystem 100 kann eine Sensoranordnung 16 umfassen. Die optischen Sensoren 17, bevorzugt alle optischen Sensoren 17, können in oder auf der Sensoranordnung 16 angeordnet sein. Die Sensoranordnung 16 ist optional. Die optischen Sensoren 17 können ebenso ohne Sensoranordnung 16 von dem Laserbearbeitungssystem 100 umfasst sein. Beispielsweise können die optischen Sensoren 17 einzeln oder gruppiert an dem Gehäuse 11 des Laserbearbeitungskopfes 10 angeordnet sein.

Die Sensoranordnung 16 kann in dem Laserbearbeitungskopf 10, insbesondere in dem Gehäuse 11 des Laserbearbeitungskopfes 10, angeordnet sein. Bevorzugt ist die Sensoranordnung 16 bezogen auf die Ausbreitungsrichtung des Laserstrahls L vor der Fokussieroptik 13 positioniert. Die Sensoranordnung 16 kann zwischen der Kollimationsoptik 12 und der Fokussieroptik 13 angeordnet sein.

Weiterhin kann der Laserbearbeitungskopf 10 eine Linse, ein transmissives Element, ein reflektives Element, ein Strahlungsformungselement, ein Strahlteiler und/oder einen optischen Keil umfassen.

Durch optische Elemente des Laserbearbeitungskopfes 10 kann ein optischer Pfad für den Bearbeitungslaserstrahl L durch den Laserbearbeitungskopf 10 festgelegt sein.

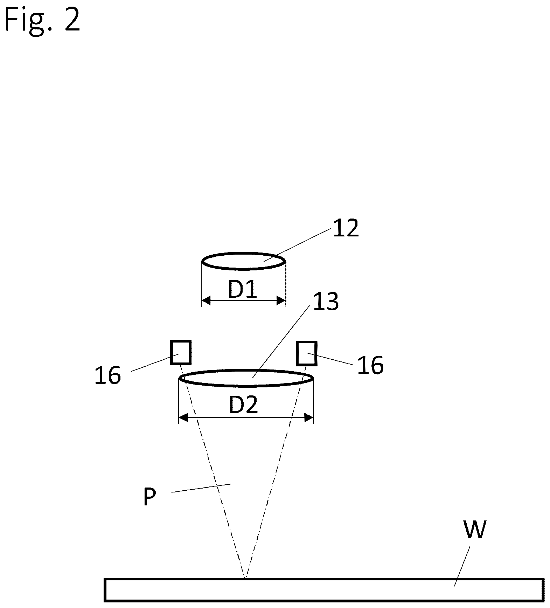

Fig. 2 zeigt einige Komponenten des Laserbearbeitungssystems 100 in einer schematischen Darstellung. Gezeigt sind die Kollimationsoptik 12, die Fokussieroptik 13 und die optionale Sensoranordnung 16 mit den optischen Sensoren 17 (nicht in Fig. 2 dargestellt). Das Laserbearbeitungssystem 100 kann einige oder alle der hierin offenbarten Komponenten und/oder Eigenschaften umfassen oder aufweisen.

Die optischen Sensoren 17, die beispielsweise in oder an der Sensoranordnung 16 angeordnet sind, können bezogen auf die Ausbreitungsrichtung des Laserstrahls L vor der Fokussieroptik 13 angeordnet sein. Von dem Werkstück W emittierte Prozessemission P kann in den Laserbearbeitungskopf 10 eintreten, die Fokussieroptik 13 durchlaufen und auf die optischen Sensoren 17 treffen.

Der Durchmesser D2 der Fokussieroptik 13 kann größer sein als der Durchmesser D1 der Kollimationsoptik 12. Insbesondere kann der Außendurchmesser der Fokussieroptik 13 größer als der Außendurchmesser der Kollimationsoptik 12 sein. Dadurch können die optischen Sensoren 17 bzw. die Sensoranordnung 16 außerhalb des Strahlengangs des Laserstrahls L angeordnet werden und der Strahlengang von Prozessemission P, die in den Laserbearbeitungskopf 10 eintritt, kann durch die Fokussieroptik 13 hindurchgeführt werden.

Fig. 3 zeigt eine Ausführungsform der Sensoranordnung 16. Die Sensoranordnung 16 umfasst die optischen Sensoren 17 (in Fig. 3 sind nur einige der Sensoren 17 mit einem Bezugszeichen versehen).

Alle optischen Sensoren 17 oder ein Teil der optischen Sensoren 17 können auf oder in der Sensoranordnung 16 angeordnet sein.

Die Sensoranordnung 16 kann eine beliebige Form aufweisen und kann beliebig in dem Laserbearbeitungskopf 10 bzw. in dem Gehäuse 11 des Laserbearbeitungskopfes 10 angeordnet sein. In dem Beispiel der Fig. 3 ist die Sensoranordnung 16 ringförmig ausgebildet. Die optischen Sensoren 17 können auf der Ringfläche 16a der Sensoranordnung 16 angeordnet sein. Die optischen Sensoren 17 können gleichmäßig verteilt oder ungleichmäßig verteilt auf der Sensoranordnung 16 angeordnet sein.

Die Sensoranordnung 16 kann eine Ausnehmung 16b aufweisen. Die Ausnehmung 16b kann im Wesentlichen in der Mitte der Sensoranordnung 16 ausgebildet sein. Die Ringfläche 16a kann die Ausnehmung 16b zumindest teilweise, insbesondere vollständig, umlaufen oder umgeben. Die Sensoranordnung 16 kann so in dem Laserbearbeitungskopf 10 angeordnet sein, dass der Laserstrahl L durch die Ausnehmung 16b hindurchstrahlen kann. Bevorzugt umgibt die Ringfläche 16a den optischen Pfad des Laserstrahls L, wenn die Sensoranordnung 16 in dem Laserbearbeitungskopf 10 angeordnet ist.

Die optischen Sensoren 17 können lichtempfindliche Flächen aufweisen. Wenn Strahlung mit einer für die optischen Sensoren 17 erfassbaren Wellenlänge (erfassbaren Wellenlängenbereich oder erfassbare Wellenlängenbereiche) auf die lichtempfindlichen Flächen einstrahlt, können die optischen Sensoren 17 ein Messsignal oder ein Sensorsignal erzeugen.

Die lichtempfindlichen Flächen der optischen Sensoren 17 können dem Werkstück W zugewandt sein. Ebenso können die lichtempfindlichen Flächen der optischen Sensoren 17 der Austrittsöffnung 40 zugewandt sein. Die lichtempfindlichen Flächen der optischen Sensoren 17 können im Wesentlichen (± 10° oder ± 5°) senkrecht zur optischen Achse der Fokussieroptik 13 oder zur optischen Achse der Kollimationsoptik 12 in dem Laserbearbeitungskopf 10 angeordnet sein.

Durch die Anordnung der optischen Sensoren 17 in dem Laserbearbeitungskopf 10 sind keine zusätzlichen Umlenkspiegel für die Auskopplung der Prozessemission Paus dem Strahlengang der Prozessemission P notwendig. Ebenso ist kein zusätzlicher Strahlteiler für die Auskopplung der Prozessemission P aus dem Strahlengang notwendig. Auch wird dadurch eine kompakte Bauweise des Laserbearbeitungskopfes 10 bzw. des Laserbearbeitungssystems 100 erreicht.

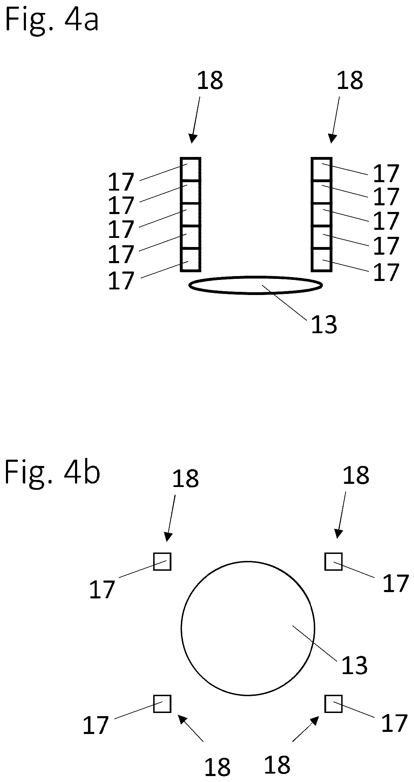

Fig. 4a zeigt schematisch einige Komponenten eines Laserbearbeitungssystems 100. Das Laserbearbeitungssystem 100 kann jedes hierin offenbarte Laserbearbeitungssystem sein, wobei gleiche Komponenten nicht erneut beschrieben werden. Die Ansicht der Fig. 4a ist eine schematische Seitenansicht.

Das Laserbearbeitungssystem 100 umfasst die bereits beschriebenen zumindest vier optischen Sensoren 17. Zumindest zwei der optischen Sensoren 17 können in einem Stapel 18 angeordnet sein. Bevorzugt sind zumindest vier, bevorzugt zumindest zehn, bevorzugt zumindest fünfzehn, optische Sensoren 17 in dem Stapel 18 angeordnet. Die optischen Sensoren 17 können in dem Stapel 18 entlang einer (gedachten) Linie angeordnet sein. Die Linie kann sich im Wesentlichen (±10° oder ±5° oder ±2°) parallel zur optischen Achse des Laserstrahls L erstrecken. Die optische Achse kann durch die Kollimationsoptik 12 und/oder die Fokussieroptik 13 festgelegt sein.

Der Stapel 18 kann vollständig in dem Laserbearbeitungskopf 10 angeordnet sein, insbesondere vollständig in dem Gehäuse 11 des Laserbearbeitungskopfes 10 angeordnet sein. Der Stapel 18 kann vollständig (entlang der optischen Achse des Laserstrahls L) zwischen der Kollimationsoptik 12 und der Fokussieroptik 13 angeordnet sein.

Die optischen Sensoren 17 des Stapels 18 können sich (alle) kontaktieren. Ebenso können die optischen Sensoren 17 des Stapels 18 (alle) voneinander beabstandet sein.

Fig. 4b zeigt die Komponenten des Laserbearbeitungssystems 100 von Fig. 4a in einer schematischen Draufsicht.

Das Laserbearbeitungssystem 100 kann mehrere Stapel 18 mit optischen Sensoren 17 umfassen. Bevorzugt umfasst das Laserbearbeitungssystem 100 zumindest zwei, bevorzugt zumindest drei, bevorzugt zumindest vier, bevorzugt zumindest fünf, Stapel 18. Jeder der Stapel 18 kann jeder hierin offenbarter Stapel 18 sein. Alle Stapel 18 können jeweils die gleiche Anzahl von optischen Sensoren 17 umfassen. Die optischen Sensoren 17 können in allen Stapeln 18 gleich angeordnet sein. Ebenso können die Stapel 18 eine unterschiedliche Anzahl von optischen Sensoren 17 umfassen und/oder die optischen Sensoren 17 können in den Stapeln 18 unterschiedliche angeordnet sein.

Die Stapel 18 können um die optische Achse herum angeordnet sein. In umfänglicher Richtung um die optische Achse herum können die Stapel 18 gleichmäßig verteilt angeordnet sein. Wenn das Laserbearbeitungssystem 100 beispielsweise vier Stapel 18 mit optischen Sensoren 17 umfasst, kann je ein Stapel 18 alle 90° in umfänglicher Richtung um die optische Achse herum angeordnet sein. Ebenso können die Stapel 18 um die optische Achse herum ungleichmäßig verteilt angeordnet sein.

## Patentansprüche

1. Laserbearbeitungssystem (100) zum Bearbeiten eines Werkstücks (W) mittels eines Laserstrahls (L), das Laserbearbeitungssystem (100) umfassend:
- einen Laserbearbeitungskopf (10) mit zumindest einer Fokussieroptik (13) zum Fokussieren des Laserstrahls (L), sodass das Werkstück (W) erwärmt wird und Prozessemission (P) auftritt;
- zumindest vier optische Sensoren (17), wobei die optischen Sensoren (17) unempfindlich gegenüber Strahlung mit der Wellenlänge des Laserstrahls (L) sind und wobei die optischen Sensoren (17) jeweils eingerichtet sind, die Prozessemission (P) in zumindest einem Wellenlängenbereich zu erfassen, der die Wellenlänge des Laserstrahls (L) nicht enthält, und darauf basierend ein jeweiliges Sensorsignal zu erzeugen; und
- eine Steuervorrichtung (30), wobei die Steuervorrichtung (30) eingerichtet ist, basierend auf einem Mittelwert der Sensorsignale die Bearbeitung des Werkstücks (W) zu überwachen.

2. Laserbearbeitungssystem nach Anspruch 1, umfassend zumindest sechs optische Sensoren (17), bevorzugt zumindest zehn optische Sensoren (17), bevorzugt zumindest zwanzig optische Sensoren (17), bevorzugt zumindest dreißig optische Sensoren (17), bevorzugt zumindest fünfzig optische Sensoren (17).

3. Laserbearbeitungssystem nach einem der vorhergehenden Ansprüche, wobei die optischen Sensoren (17) Halbleitersensoren umfassen, bevorzugt wobei die Halbleitersensoren Verbindungshalbleitersensoren sind, bevorzugter wobei die Halbleitersensoren GaAsP-Sensoren sind.

4. Laserbearbeitungssystem nach einem der vorhergehenden Ansprüche, wobei alle optischen Sensoren (17) gleichartig sind oder die optischen Sensoren (17) zumindest zwei unterschiedliche Arten von Sensoren umfassen.

5. Laserbearbeitungssystem nach einem der vorhergehenden Ansprüche, wobei die optischen Sensoren (17) zumindest in einem Wellenlängenbereich von mehr als 900 nm, bevorzugt von mehr als 800 nm, und/oder von weniger als 550 nm, bevorzugt von weniger als 600 nm, unempfindlich sind.

6. Laserbearbeitungssystem nach einem der vorhergehenden Ansprüche, wobei der Laserstrahl (L) eine Wellenlänge zwischen 950 nm und 1200 nm, bevorzugt zwischen 1000 nm und 1150 nm, aufweist oder eine Wellenlänge zwischen 500 nm und 550 nm aufweist.

7. Laserbearbeitungssystem nach einem der vorhergehenden Ansprüche, wobei die optischen Sensoren (17) in dem Laserbearbeitungskopf (10) angeordnet sind, insbesondere wobei der Laserbearbeitungskopf (10) ein Gehäuse (11) umfasst und die optischen Sensoren (17) in dem Gehäuse angeordnet sind.

8. Laserbearbeitungssystem nach einem der vorhergehenden Ansprüche, wobei die optischen Sensoren (17) bezogen auf die Ausbreitungsrichtung des Laserstrahls (L) vor der Fokussieroptik (13) angeordnet sind.

9. Laserbearbeitungssystem nach einem der vorhergehenden Ansprüche, wobei die optischen Sensoren (17) außerhalb des optischen Pfads des Laserstrahls (L) angeordnet sind und/oder wobei die optischen Sensoren (17) in einer Ebene senkrecht zur optischen Achse der Fokussieroptik (13) und/oder symmetrisch zur optischen Achse der Fokussieroptik (13) angeordnet sind.

10. Laserbearbeitungssystem nach einem der vorhergehenden Ansprüche, weiterhin umfassend eine ringförmige Sensoranordnung (16), wobei die optischen Sensoren (17) auf der Ringfläche (16a) der Sensoranordnung (16) angeordnet sind, insbesondere wobei die Sensoranordnung (16) koaxial zur optischen Achse der Fokussieroptik (13) angeordnet ist.

11. Laserbearbeitungssystem nach einem der Ansprüche 1 bis 9, wobei zumindest zwei optische Sensoren (17), bevorzugt zumindest drei oder zumindest vier optische Sensoren (17) in einem Stapel (18) angeordnet sind, wobei die optischen Sensoren (17) entlang einer Linie angeordnet sind, insbesondere wobei das Laserbearbeitungssystem (100) zumindest zwei Stapel (18) mit Sensoren (17) umfasst.

12. Laserbearbeitungssystem nach einem der vorhergehenden Ansprüche, wobei das Laserbearbeitungssystem (100) eingerichtet ist, in das Werkstück (W) mittels des Laserstrahls (L) einzustechen und/oder das Werkstück (W) mittels des Laserstrahls (L) zu schneiden.

13. Laserbearbeitungssystem nach einem der vorhergehenden Ansprüche, wobei die Steuervorrichtung (30) eingerichtet ist, basierend auf dem Mittelwert einen Einstechzeitpunkt des Laserstrahls (L) in das Werkstück (W) zu bestimmen, einen Einstechvorgang des Laserstrahls in das Werkstück (W) zu überwachen, eine Qualität der Bearbeitung des Werkstücks (W) zu bestimmen, eine Qualität einer Schnittkante des Werkstücks (W) zu bestimmen und/oder den Bearbeitungsprozess zu regeln.

14. Laserbearbeitungssystem nach einem der vorhergehenden Ansprüche, wobei die optischen Sensoren (17) parallelgeschaltet sind, insbesondere wobei der Mittelwert der Sensorsignale ein durch die Parallelschaltung der optischen Sensoren (17) erhaltenes Sensorsignal ist.

15. Verfahren zum Bearbeiten, insbesondere zum Schneiden, eines Werkstücks (W) mittels eines Laserstrahls (L), wobei das Verfahren die Schritte umfasst:
- Einstrahlen des Laserstrahls (L) auf das Werkstücks, sodass sich das Werkstück (W) erwärmt und Prozessemission (P) auftritt;
- Erfassen der Prozessemission (P) mittels zumindest vier optischer Sensoren (17) in zumindest einem Wellenlängenbereich, der die Wellenlänge des Laserstrahls (L) nicht enthält, und darauf basierend Erzeugen eines jeweiligen Sensorsignals, wobei die optischen Sensoren (17) unempfindlich gegenüber Strahlung mit der Wellenlänge des Laserstrahls (L) sind; und
- Überwachen der Bearbeitung des Werkstücks (W), insbesondere mittels einer Steuervorrichtung (30), basierend auf einem Mittelwert der Sensorsignale.
